# EUROPÄISCHE PATENTSCHRIFT

(11) **EP 1 240 300 B1**
(45) Veröffentlichungstag und Bekanntmachung des Hinweises auf die Patenterteilung: **15.02.2006**
(21) Anmeldenummer: 00983318.7
(22) Anmeldetag: 14.12.2000
(51) Int. Cl.: C11D 3/39, C11D 3/48, A01N 37/16, A01N 61/00, A01N 37/02, A01N 25/30

(54) **DESINFIZIERENDES WASCHEN EMPFINDLICHER TEXTILIEN MIT PERSÄUREN**
WASHING OF DELICATE TEXTILES USING PERACIDS TO DISINFECT THE SAME
LAVAGE DESINFECTANT DE TEXTILES SENSIBLES AU MOYEN DE PERACIDES

(30) Priorität: 23.12.1999 DE 19962343
(43) Veröffentlichungstag der Anmeldung: 18.09.2002
(73) Patentinhaber: ECOLAB INC., St. Paul, MN 55102-1390 (US)
(72) Erfinder: KÖRBER, Heinz-Otto, 42109 Wuppertal (DE); MEYER, Bernhard, 40822 Mettmann (DE); MERZ, Thomas, 40723 Hilden (DE); ROTH, Christian, 53332 Bornheim (DE)
(74) Vertreter: Sternagel, Fleischer, Godemeyer & Partner
(86) Internationale Anmeldenummer: PCT/EP2000/012695
(87) Internationale Veröffentlichungsnummer: WO 2001/048136

(56) Entgegenhaltungen:
- EP-A- 0 610 010
- WO-A-00/15750
- WO-A-91/03590
- WO-A-98/54279
- DE-A- 3 121 242
- US-A- 5 489 434

## Beschreibung

Die vorliegende Erfindung betrifft die Verwendung von persäurehaltigen Kombinationen zum desinfizierenden Waschen von Textilien sowie spezielle persäurehaltige Textil- und Wolldesinfektionsmittel und Verfahren zum textilschonenden desinfizierenden Waschen von Textilien.

Im Stand der Technik ist bekannt, daß man beim Waschen von TextilienPersäureverbindungen einsetzen kann. Die üblicherweise eingesetzten Persäureverbindungen können, je nach Art der Persäureverbindung und Anwendungstemperatur, sowie -konzentration im Waschprozeß desinfizierende Wirkung haben.

Im Stand der Technik ist auch bekannt, daß bei Verwendung von Persäuren, wie z.B.Peressigsäure, Textilien bzw. Textilfasern im Waschverfahren nachhaltig geschädigt werden. Dies trifft um so mehr zu, wenn es um das Waschen empfindlicher Textilien, bestehend aus Materialien wie Wolle, Seide, Polyacryl, Viskose, Polyamid, Acetat, Lyocell, geht.
Das Ausmaß der Schädigung wird darüberhinaus durch die Bedingungen des Waschpozesses wie Mechanik, Temperatur, Zeit, Konzentration und Art der Chemie beeinflußt.
In Abhängigkeit von den Bedingungen kommt es zu mehr oder weniger starken Schädigung von Textilien. Bei Wolltextilien führt erhöhte Mechanik zur irreversiblenverhakung der Textilfasem miteinander, was dazu führt, daß Wolle erheblich schrumpft. Von den Bedingungen des Waschprozesses hängt auch ab, ob und wie stark die Polymerstruktur der Textilfasem verändert wird. Eine Veränderung der Polymerstruktur führt zu einer Verringerung der Reißfestigkeit von Textilien. Bei Wolle resultiert hieraus eine erhöhte Alkalilöslichkeit.

Um dieses Problem zu lösen, ist es erforderlich, den desinfizierenden Waschprozeß unter besonders schonenden Bedingungen durchzuführen.
Im Stand der Technik ist bekannt, daß man durch Senken der Temperatur die faserschädigende Wirkung herabsetzen kann. Außerdem wird im Waschprozess für sensible Textilien in der Regel ein Feinwaschmittel eingesetzt, welches die Textilfaser weniger schädigt.

Trotzdem führt der Zusatz von ausreichend wirksamen Mengen Persäureverbindungen auch in Kombination mit üblichen Feinwaschmitteln bereits bei niedrigen Waschternperaturen, wie 30 °C bis 40 °C im desinfizierenden Waschprozeß zu den oben beschriebenen Nachteilen.
Aus diesem Grund hat man sich im Stand der Technik mit anderen Wirkstoffen zum desinfizierenden Waschen von Textilien beschäftigt.
Es wurde festgestellt, daß Desinfektionsmittel auf Basis quartemärer Ammoniumverbindungen bei niedrigen Temperaturen in der Regel keine ausreichende Desinfektionswirkung im desinfizierenden Waschprozess haben.
Bei Untersuchungen mit Desinfektionsmitteln auf Basis von Aldehyden beobachtet man starke Textilschädigung.

Dementsprechend war es Aufgabe der vorliegenden Erfindung, die Möglichkeit zu schaffen, Textilien, insbesondere empfindliche Textilien im niedrigen Temperaturbereich desinfizierend zu waschen und dabei die Textilien bzw. Textilfasem möglichst wenig zu schädigen.

Gegenstand der vorliegenden Erfindung ist die Verwendung einer Desinfektionskomponente, die eine Kombination aus Persäure und
a) wenigstens einer Fettsäure
enthält, beim desinfizierenden Waschen von Textilien, zur Verringerung der faserschädigenden Wirkung der Persäure.

Es ist bevorzugt, daß Textilien, die gegenüber oxidativen Desinfektionsmitteln und/oder Temperatur empfindlich sind, bei einer Temperatur von 10 bis 55 °C, besonders bevorzugt bei einer Temperatur von 20 bis 45 °C, desinfizierend gewaschen werden.

Es ist bevorzugt, daß die gegenüber oxidativen Desinfektionsmitteln und/oder Temperatur empfindlichen Textilien Materialien ausgewählt aus Wolle, Acetat, Lyocell, Seide-, Viskose-, Polyacrylfasern, Polyamid enthalten.

Vorzugsweise werden die erfindungsgemäß zu verwendenden desinfizierenden Komponenten zusammen mit üblichen Spezial-, Bunt-, Allein- und Feinwaschmitteln verwendet.

Vorzugsweise enthält die erfindungsgemäß zu verwendende Desinfektionskomponente als Persäure eine Verbindung ausgewählt aus
a) den Persäuren oder Salzen von Persäuren mit der allgemeinen Formel I

   R²-O₂C-(CH₂)ₓ-CO₃H (I)

   worin R² Wasserstoff oder eine Alkylgruppe von 1 bis 4 Kohlenstoffatomen, besonders bevorzugt Wasserstoff und/oder Methyl, und x eine Zahl von 1 bis 4 ist, und/oder
b) den Phthalimido-Percarbonsäuren (II), worin der Percarbonsäure-Anteil 1 bis 18 Kohlenstoffatome, besonders bevorzugt 1 bis 8 Kohlenstoffatome, enthält, und/oder
c) den Verbindungen der Formel III

   R¹-CO₃H (III)
worin R¹ eine Alkyl- oder Alkenylgruppe mit 1 bis 18 Kohlenstoffatomen ist, besonders bevorzugt 1 bis 12 Kohlenstoffatomen, enthält.

In einer ganz besonders bevorzugten Ausführung der vorliegenden Erfindung enthält die erfindungsgemäß zu verwendende Desinfektionskomponente als Persäuren eine oder mehrere Verbindungen ausgewählt aus Peressigsäure, Perpropionsäure, Peroctansäure, Phthalimidoperhexansäure, Phthalimidoperoctansäure, Persuccinsäure, Persuccinsäuremonomethylester, Perglutarsäure, Perglutarsäuremonomethylester, Peradipinsäure, Peradipinsäuremonomethylester, Perbemsteinsäure, Perbemsteinsäuremonomethylester.

Es ist bevorzugt, daß durch Zugabe der Desinfektionskomponente eine wäßrige desinfizierende Waschlösung erzeugt wird, in der der Persäure-Anteil, bezogen auf die gesamte desinfizierende Waschlösung, 0,0001 bis 2 Gew.%, besonders bevorzugt zwischen 0,001 und 0,2 Gew.%, beträgt.

In einer weiteren bevorzugten Ausführungsform der vorliegenden Erfindung wird durch Zugabe der erfindungsgemäß zu verwendenden Desinfektionskomponente eine wäßrige desinfizierende Waschlösung erzeugt, in der zusätzlich Wasserstoffperoxid mit einem Anteil, bezogen auf die gesamte desinfizierende Waschlösung von 0,0005 bis 2 Gew.%, besonders bevorzugt zwischen 0,005 und 0,8 Gew.%, enthalten ist.

Vorzugsweise ist in der Desinfektionskomponente zusätzlich die zur vorhandenen Persäure korrespondierende nicht oxidierte Säure und im Fall der Esterpersäuren auch die korrespondierende nicht veresterte Form der nicht oxidierten Säure enthalten.

Es ist bevorzugt, daß in der erfindungsgemäß zu verwendenden Desinfektionskomponente als Fettsäure eine Fettsäure mit 8 bis 12 Kohlenstoffatomen und besonders bevorzugt Octansäure enthalten ist.

Vorzugsweise weist die Desinfektionskomponente zusätzlich a) weingstens ein Hydrotrop und/oder b) wenigstens eine tensidische Komponente und/oder c) wenigstens eine komplexbildende Komponente auf.

Weiterhin ist bevorzugt, daß das Hydrotrop ausgewählt ist aus den Gruppen der anionischen Tenside, besonders bevorzugt aus den Sulfonaten/Suffonsäuren und insbesondere aus Cumol-, Xylol-, Octyl-, Naphthyl- und Alkylbenzolsulfonaten/Sulfonsäuren, wobei im letzten Fall die Alkylgruppe zwischen 6 und 16 Kohlenstoffatomen beinhaltet.

Vorzugsweise ist in der erfindungsgemäß zu verwendenden Desinfektionskomponente als tensidische Komponente eine Verbindung enthalten, die ausgewählt ist aus den Gruppen der anionischen, kationischen, nichtionischen, amphoteren Tenside, Eiweißhydrolysate z. B. Lamepontypen, der Alkylaminoxide, der Silikonverbindungen und der Phosphorsäureester und deren Salzen.

Ganz besonders bevorzugt sind in diesem Zusammenhang kationisierte Proteinhydrolysate. Beispielsweise handelt es sich dabei um partiell hydrolysierte Collagene, die nach Modifizierung mit Epichlorhydrin durch Reaktion mit Alkyldimethylamin zum quartemären Ammoniumchlorid umgesetzt werden. Die Alkylgruppe des Amins enthält vorzugsweise 8 bis 20 Kohlenstoffatome.

Als anionisches Tensid können beliebige, auf dem Gebiet der Wasch- und Reinigungsmittel übliche anionische Tenside eingesetzt werden, wie z. B. C₈-C₁₈-Alkylsulfate, C₈-C₁₈-Alkylethersulfate, C₈-C₁₈-Alkansulfonate, C₈-C₁₈-α-Olefinsulfonate, sulfonierte C₈-C₁₈-Fettsäuren, C₈-C₁₈-Alkylbenzolsulfonate, Sulfonbemsteinsäuremomo- und -di-C₁-C₁₂-Alkylester, C₈-C₁₈₋Alkylpolyglykolethercarboxylate, C₈-C₁₈-N-Acyltauride, C₈-C₁₈-N-Sarkosinate, C₈-C₁₈-Alkylisethionate sowie Gemische der voranstehenden.
Als Aminoxid ist vorzugsweise Trialkylaminoxid mit einer 8 bis 20 Kohlenstoff-Atome enthaltenden Alkylgruppe und zwei Alkylgruppen mit einer geringeren Anzahl an Kohlenstoffatomen in der Alkylkette, wobei die beiden kürzeren Alkylgruppen gleich oder verschieden sein können, wobei besonders bevorzugt das Aminoxidderivat Talgfett-bis-(2-hydroxyethyl-)-aminoxid, Oleyl-bis-(2-hydroxyethyl) -aminoxid, Kokos-bis-(2-hydroxyethyl-)-aminoxid, Tetradecyldimethyl-aminoxid und/oder Alkyldimethyl-aminoxid, die 12 bis 18 Kohlenstoffatome in der Alkylkette aufweisen, ist, enthalten.
Vorzugsweise werden als nichtionische Tenside in der erfindungsgemäß zu verwendenden Desinfektionskomponente Alkylpolyglukoside, die üblicherweise durch Kondensation von Fettalkoholen mit Glukose oder Polyglukose großtechnisch zugänglich und in verschiedenen Varianten im Handel erhältlich sind, eingesetzt. Beispiele von Alkylpolyglukosiden, die sich für den erfindungsgemäßen Einsatz besonders gut eignen, sind die Produkte Glukopon® 600 der Firma Henkel und Triton® BG10 der Firma Röhm 8 Haas.
Weitere bevorzugte nichtionische Tenside sind alkoxylierte Alkylalkohole mit 8 bis 22 Kohlenstoffatomen in der Alkylkette befindet, wobei insbesondere wenigstens eine Verbindung aus den Gruppen der gemischten Ethoxylate/Propoxylate von verzweigten oder unverzweigten Alkylalkoholen mit 8 bis 22 Kohlenstoffatomen in der Alkylkette und der endgruppenverschlossenen Ethoxylate von verzweigten oder unverzweigten Alkylalkoholen mit 8 bis 22 Kohlenstoffatomen in der Alkylkette enthalten ist, und ganz besonders bevorzugt wenigstens eine Verbindung aus den Gruppen ethoxylierter und propoxylierter Alkylalkohole mit 12 bis 22 Kohlenstoffatomen im Alkylteil, der Butylether ethoxylierter Alkylalkohole mit 12 bis 22 Kohlenstoffatomen im Alkyteil und Methylether ethoxylierter Alkylalkohole mit 12 bis 22 Kohlenstoffatomen im Alkylteil enthalten ist, wobei im speziellen Fall Butylether und Methylether des ethoxylierten 2-Octyl-1-dodecanols enthalten sind.
Nichtionische Tenside, die zur Herstellung der efindunggemäßen Formulierungen besondes gut geeignet sind, sind beispielsweise Plurafac® LF 403, Plurafac® 431 der Firma BASF sowie Dehypon® LT 104 und Dehypon® G 2084 der Firma Henkel.

Vorzugsweise werden als Phosphorsäureester in der erfindungsgemäß zu verwendenden Desinfektionskomponente Phosphorsäureesterverbindungen eingesetzt, worunter sich vorzugsweise zumindest ein Salz eines Phosphorsäurepartialesters befindet, wobei besonders bevorzugt wenigstens ein Alkalisalz eines Phosphorsäurepartialesters von alkoxyliertern Alkylphenol vorliegt.

Bei den Phosphorsäureestern handelt es sich um tensidische Substanzen, die sich vorzugsweise von langkettigen aliphatischen oder araliphatischen Alkoholen ableiten. Als besonders geeignet haben sich die Salze der Phosphorsäurepartialester und hier insbesondere die von alkoxylierten Alkylphenolen erwiesen. Vorzugsweise werden als Alkalisalze die Natrium- und Kaliumsalze verwendet, von denen wiederum die Kaliumsalze besonders bevorzugt werden. Tensidisch wirksame Phosphorsäurepartialester, wie sie bevorzugt erfindungsgemäß verwendet werden, sind im Handel erhältlich. Ein Beispiel eines erfindungsgemäß besonders gut brauchbaren Wirkstoffs dieser Art ist das Produkt Triton® H 66 (Röhm & Haas).

Vorzugsweise ist in der erfindungsgemäß zu verwendenden Desinfektionskomponente als Komponente mit komplexbildenden Eigenschaften eine Verbindung enthalten, die ausgewählt ist aus Nitrilotriessigsäure, Ethylendiamintetraessigsäure, Methylglycindiessigsäure, Gluconsäure, Zitronensäure, Dicarboxymethyl-L-glutaminsäure, Serindiessigsäure, lmidosuccinsäure, und der Gruppe der Polycarbonsäuren und Phosphonsäuren sowie jeweils deren Salzen.
Als Polycarbonsäuren kommen beispielsweise Polyacrylsäuren und Copolymere aus Maleinsäureanhydrid und Acrylsäure sowie die Natriumsalze dieser Polymersäuren in Betracht. Handelsübliche Produkte sind z. B. Sokalan® CP 5 und PA 30 von BASF, Alcosperse® 175 und 177 von Alco, LMW® 45 N und SPO2 ND von Norsohaas. Zu den geeigneten nativen Polymeren gehören beispielsweise oxidierte Stärke (z. B. DE 42 28 786) und Polyaminosäuren wie Polyglutaminsäure oder Polyasparaginsäure, z. B. der Firmen Cygnus, Bayer, Rohm & Haas, Rhöne-Poulenc oder SRCHEM.

Als Phosphonsäuren kommen beispielsweise 1-Hydroxyethan-1,1-diphosphonsäure, D-iethylentriaminpentamethylenphosphonsäure oder Ethylendiamintetramethylenphosphonsäure sowie jeweils deren Alkalisalze in Frage.

Es ist weiterhin bevorzugt, daß die erfindungsgemäß zu verwendende Desinfektionskomponente als wäßrige Lösung, Gel, Emulsion, Paste, Dispersion, Pulver, Granulat, Schuppen, Perlen, Tablette, blockartiger Formkörper, Extrudat in den desinfizierenden Waschprozeß eingebracht wird.

Ebenfalls ist es bevorzugt, daß die Desinfektionskomponente im Bedarfsfall vor oder beim Einsatz im desinfizierenden Waschprozeß mit Wasser verdünnt werden, wobei es besonders bevorzugt ist, wenn der Verdünnungsfaktor zwischen 10 und 10000 liegt.

Die erfindungsgemäß zu verwendenden Desinfektionskornponenten werden bevorzugt zum desinfizierenden Waschen von Haushalts-, Hotel-, Restaurant-, Krankenhaus-, Bett-, OP-, Militärwäsche sowie Berufskleidung, Schmutzfangmatten, Rollhandtücher, Naßwischmops, Spezialtextilien und/oder Wäsche aus Justizvollzugsanstalten, Altenheime, Behindertenheime, Pflegeheime verwendt, wobei es besonders bevorzugt ist, wenn sich unter der Wäsche empfindliche Textilien befinden.

Für die erfindungsgemäß zu verwendende Desinfektions Komponente ist es besonders bevorzugt, daß zwischen 1 und 20 Gew.% Persäure in Kombination mit
a) 0,1 bis 10 Gew.% Fettsäure
enthalten sind. Als ganz besonders bevorzugt ist eine Ausführungsform anzusehen, bei der in dem Mittel als Persäure eine Esterpersäure gemäß Formel 1 enthalten ist und zusätzlich ein Anteil von mehr als 35 Gew.-% Wasserstoffperoxid, bezogen auf das gesamte Mittel, vorliegt.

Durch derartige Formulierung des Mittels kann insbesondere die fungizide Wirkung des Mittels wesentlich verbessert werden, wie auch den Beispielen zu entnehmen ist.

### Beispiele

### Beispiel 1:

In einem ersten Versuch wurde unter standardisierten Waschbedingungen der Einfluß unterschiedlicher Chemikalien auf das Schrumpfverhalten von Wolle untersucht. Als Ergebnis des Versuchs erhält man den sogenannten Wollschrumpf in Prozent, der angibt, um wieviel Prozent ein Standard-Woll-Textil (IWS-Wolltextilien) pro Waschzyklus schrumpft. Die Behandlung der Standardtesttextilien (IWS-Wolltextilien) wurde in einem ersten Durchgang für 20 Minuten bei einer Temperatur von 30 °C durchgeführt. In einem zweiten Durchgang wurden entsprechende Standardtesttextilien über einen Zeitraum von 20 Minuten bei 40 °C behandelt. Die entsprechenden Waschdurchgänge werden insgesamt 10 Mal durchgeführt und im Anschluß der dann vorliegende Wollschrumpf durch 10 dividiert, um den gemittelten Wollschrumpf pro Waschzyklus zu erhalten.
Im Vergleichsversuch wurden Untersuchungen mit einer wäßrigen desinfizierenden Waschlösung mit einem Anteil von 0,4 % eines marktüblichen Feinwaschmittels A sowie 0,3 % eines Peressigsäureproduktes A (mit etwa 9% Peressigsäure und etwa 20 % Wasserstoffperoxid) durchgeführt.
Bekanntermaßen ist die Peressigsäure in derartigen Formulierungen bei genannter Temperatur hauptverantwortlich für die Desinfektionswirkung.
Deshalb wurde in dem erfindungsgemäßen Versuch, die gleiche Menge an Peressigsäure, nämlich 0,4 % eines Peressigsäureproduktes B (mit etwa 9 % Peressigsäure, etwa 12 % Wasserstoffperoxid und etwa 4 % Octansäure) eingestellt wie im Vergleichsversuch und das gleiche handelsübliche Feinwaschmittel A in einer Konzentration von 0,4 % eingesetzt.

Neben dem Einfluß auf das Schrumpfverhalten von Wolle wurde auch die Beeinflussung der Reißfestigkeit sowie die Alkalilöslichkeit bei Waschverfahren getestet, die bei 30 °C bzw. 40 °C durchgeführt wurden, untersucht. Die Ergebnisse sind in Tabelle 1 enthalten.

**Tabelle 1: Auswirkung unterschiedlicher Desinfektionskomponenten auf Wollschrumpf, Reißfestigkeit und Alkalilöslichkeit**

| **20minütiges Waschen mit** | **Wollschrumpf [%]** | **Reißkraftverlust [%] nach 10 Waschzyklen** | **Alkalilöslichkeit [%] nach 10 Waschzyklen** |
|---|---|---|---|
| **Vergleichsversuche:** V1 bei 30 °C: 0.4 % handelsübliches Feinwaschmittel A und 0,3 % Peressigsäureprodukt A | 2,7 | 23 | 54 |
| V2 bei 40 °C: 0,4 % handelsübliches Feinwaschmittel A und 0,3 % Peressigsäureprodukt A | 2,9 | 25,2 | 63,8 |
| **Erfindungsgemäße Versuche:** E1 bei 30 °C: 0,4 % handelsübliches Feinwaschmittel A und 0,3 % Peressigsäureprodukt B | 1,8 | 16,1 | 37 |
| E2 bei 40 °C: 0,4 % handelsübliches Feinwaschmittel A und 0,3 % Peressigsäureprodukt B | 1,8 | 17,3 | 41 |

| | | | |
|---|---|---|---|
| *inclusive 6 Gew.- % Einweißhydrolysat | | | |

Das handelsübliche Feinwaschmittel A enthält unter anderem eine Kombination von Alkylbenzolsulfonat, Triethanolamin. Citrat sowie nichtionisches Tensid und Alkohole, sowie Wasser.

Aus Tabelle 1 läßt sich entnehmen, daß beim desinfizierenden Waschen mit Peressigsäure in Abhängigkeit von den in der Desinfektionskomponente enthaltenen Zusatzmitteln unterschiedliche Ergebnisse bezüglich Wollschrumpf, Reißkraftverlust und Alkalilöslichkeit vorliegen.

Der vorliegende Versuch macht deutlich, daß die Octansäure einen Einfluß auf das Ergebnis des desinfizierenden Waschvorgangs haben.

### Beispiel 2:

In einem zweiten Versuch wurde das chemothermische Wäschedesinfektionspotential von Waschlösungen gemäß Tabelle 1 (siehe V1, V2) bei 40 °C und einer Einwirkzeit von 20 Minuten untersucht. Als Testkeim wurde Mycobakterium terrae verwendet und die Reduktionsfaktoren gegenüber diesem Testkeim untersucht. Die Keimzahl pro Keimträger war sowohl im Versuch mit der desinfizierenden Waschlösung des Vergleichsversuchs (V1, V2), als auch im Versuch mit der desinfizierenden Waschlösung gemäß der vorliegenden Erfindung (E1, E2), größer als 10⁶.
Das Versuchsergebnis zeigt, daß bei der desinfizierenden Wäsche bei 40°C sowohl mit der Vergleichswaschlösung als auch mit der erfindungsgemäßen Waschlösung Reduktionsfaktoren von größer 6 erreicht werden. Diese Werte bestätigen, daß sowohl die Kombination Peressigsäure mit Feinwaschmitteln als auch die Kombination Peressigsäure mit Zusatzkomponenten gemäß der vorliegenden Erfindung und Feinwaschmittein ausreichende Desinfektionswirksamkeit im desinfizierenden Waschvorgang erreicht werden.

### Beispiel 3:

In einer dritten Versuchsserie wurde das antimikrobielle Wirkungsspektrum verschiedener Kombinationen von Persäuren mit ausgewählten Zusatzstoffen im quantitativen Suspensionstest nach DVG bei Raumtemperatur untersucht.

Als Testkeime zur Ermittlung der bakteriziden Wirksamkeit wurden Staphylococcus aureus und Escherichia coli herangezogen. Als Testkeime zur Ermittlung derfungiziden Wirksamkeit wurden Saccharomyces cerevisiae sowie Aspergillus niger herangezogen. Die geprüften Rezepturen sind in Tabelle 2 enthalten. Die Ergebnisse im quantitativen Suspensionstest können aus Tabelle 3 sowie aus Tabelle 4 entnommen werden.

Aus den tabellierten Ergebnissen ist zu entnehmen, daß durch ausgewählte Kombinationen das Wirkungsspektrum von Persäuren wesentlich verbessert werden kann. Dies ist insbesondere deshalb wichtig, da an Textilien ein breites Spektrum allgegenwärtiger Mikrorganismen haftet.

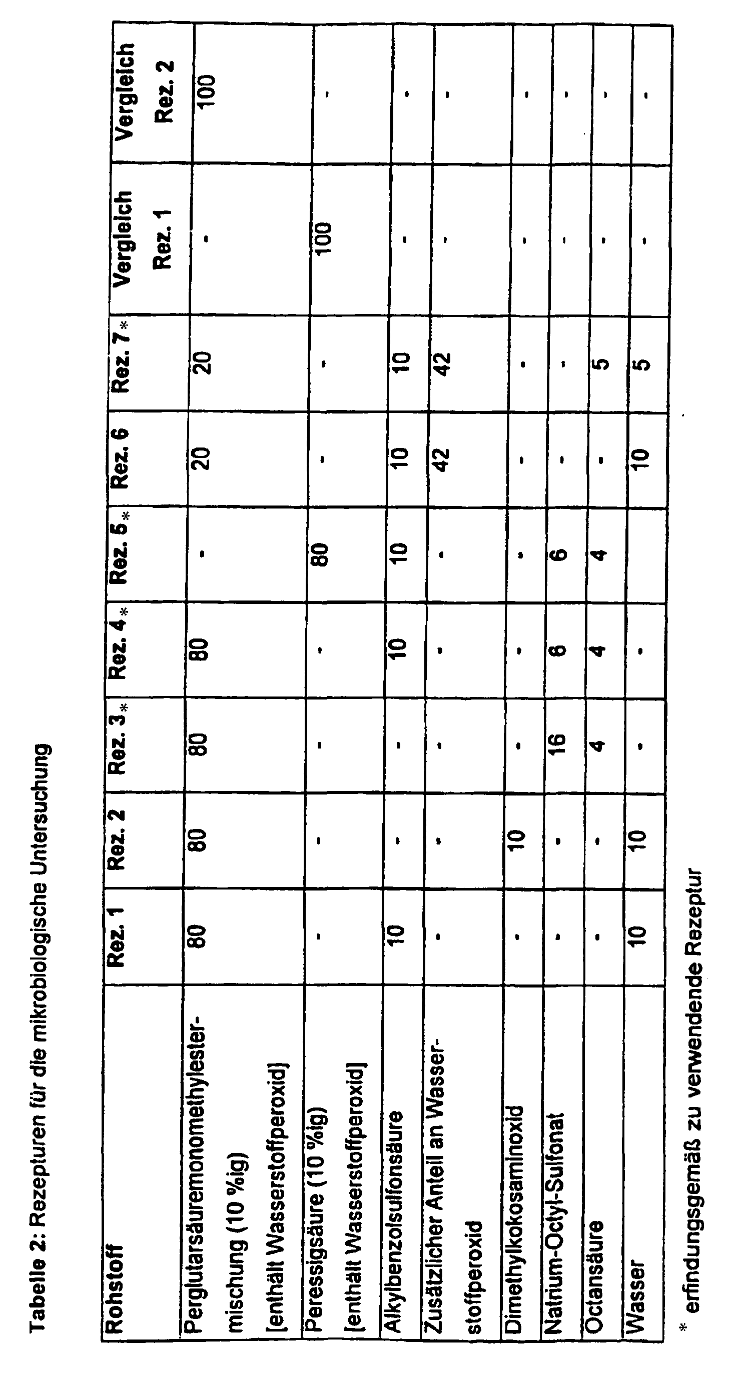

**Tabelle 3: Ergebnisse der mikrobiologischen Untersuchungen gegen Bakterien**

| Produkt | [AWK] % | Staphylococcus aureus ATCC 6538 (K 3212) Inoculum 7,05 x 10⁸ KBE / ml | | Escherichia coli ATCC 10536 (K 2124) Inoculum 1,07 x 10⁹ KBE / ml | |
|---|---|---|---|---|---|
| | | 1 Minute RF | 5 Minuten RF | 1 Minute RF | 5 Minuten RF |
| Vergleichs-Rezeptur 1 | 0,1 | 1,3 | >4,87 | >5,2 | >5,3 |
| | 0,3 | 3,4 | >4,87 | >5,2 | >5,3 |
| Vergleichs-Rezeptur 2 | 0,1 | 0,04 | >4,87 | 3,69 | >5,3 |
| | 0,3 | 0,59 | >4,87 | >5,2 | >5,3 |
| Rezeptur 1 | 0,1 | 3,42 | >4,87 | >5,2 | >5,3 |
| | 0,3 | >4,9 | >4,87 | >5,2 | >5,3 |
| Rezeptur 2 | 0,1 | 0 | 0, 09 | 1,17 | >5,3 |
| | 0,3 | 0,03 | >4,87 | >5,2 | >5,3 |
| Rezeptur 3* | 0,1 | >4,9 | >4,87 | >5,2 | >5,3 |
| | 0,3 | >4,9 | >4,87 | >5,2 | >5,3 |
| Rezeptur 4* | 0,1 | 3,04 | >4,87 | >5,2 | >5,3 |
| | 0,3 | >4,9 | >4,87 | >5,2 | >5,3 |
| Rezeptur 5* | 0,1 | 3,2 | >4,87 | >5,2 | >5,3 |
| | 0,3 | >4,9 | >4,87 | >5,2 | >5,3 |

| | | | | | |
|---|---|---|---|---|---|
| AWK = Anwendungskonzentration; RF-Werte = Keimreduktion in LOG-Stufen | | | | | |
| * erfindungsgemäß zu verwendende Rezeptur | | | | | |

**Tabelle 4: Ergebnistabelle zur fungiziden Wirksamkeit nach DVG**

| Produkt | [AWK] % | Saccharomyces cerevisiae ATCC 9763 (K 5011) Inoculum 1,36 x 10⁷ KBE / ml | | Aspergillus niger ATCC 16404 (K 7444) Inoculum 1,07 x 10⁹ KBE / ml | |
|---|---|---|---|---|---|
| | | 5 Minuten RF | 30 Minuten RF | 5 Minuten RF | 30 Minuten RF |
| Vergleichs-Rezeptur 1 | 0,3 | 0,53 | 0,55 | 0 | 0 |
| | 1,0 | 0,71 | 1,4 | 0 | 0 |
| Vergleichs-Rezeptur 2 | 0,3 | 0,21 | 0,24 | 0 | 0 |
| | 1,0 | 0,24 | 1,1 | 0 | 0 |
| Rezeptur 1 | 0,3 | 2,88 | >3,19 | 0 | 0 |
| | 1,0 | >3,18 | >3,19 | 0 | 0,02 |
| Rezeptur 2 | 0,3 | 0,55 | >3,19 | 0 | 0,38 |
| | 1,0 | >3,18 | >3,19 | 0,22 | 0,85 |
| Rezeptur 3 * | 0,3 | >3,18 | >3,19 | 0,31 | 0,54 |
| | 1,0 | >3,18 | >3,19 | 1,56 | 4,02 |
| Rezeptur 4 * | 0,3 | 3,18 | 3,19 | 0,39 | 0,87 |
| | 1,0 | 3,18 | 3,19 | 1,34 . | >4,02 |
| Rezeptur 5 * | 0,3 | 3,18 | 3,19 | 0,61 | 1,3 |
| | 1,0 | 3,18 | 3,19 | 1,74 | >4,02 |
| Rezeptur 6 | 0,3 | 2,89 | - | - | - |
| | 1,0 | >3,18 | - | 0,06 | 0,06 |
| Rezeptur 7* | 0,3 | >3,18 | - | - | - |
| | 1,0 | >3,18 | - | 0,06 | >4,02 |

| | | | | | |
|---|---|---|---|---|---|
| AWK = Anwendungskonzentration | | | | | |
| RF-Werte = Keimreduktion in LOG-Stufen | | | | | |
| * erfindungsgemäß zu verwendende Rezeptur | | | | | |

Aus den Werten ergibt sich, daß die fungizide Wirksamkeit des Persäureesters durch Zugabe von Wasserstoffperoxid und gleichzeitiger Reduzierung des Persäureester-Anteils wesentlich verbessert werden kann.

## Patentansprüche

1. Verwendung einer Desinfektionskomponente, die eine Kombination aus Persäure und wenigstens einer Fettsäure enthält, beim desinfizierenden Waschen von Textilien zur Verringerung der faserschädigenden Wirkung der Persäure.

2. Verwendung nach Anspruch 1, **dadurch gekennzeichnet, daß** die Desinfektionskomponente zwischen 1 und 20 Gew.-% Persäure in Kombination mit 0,1 bis 10 Gew.-% Fettsäure enthält, wobei ein Rest zu 100 Gew.-% aus Wasser und/oder weiteren Wirk- oder Hilfsstoffen besteht.

3. Verwendung nach Anspruch 1 oder 2, **dadurch gekennzeichnet, daß** die Desinfektionskomponente zusätzlich
a) wenigstens ein Hydrotrop und/oder
b) wenigstens eine tensidische Komponente und/oder
c) wenigstens eine komplexbildende Komponente
enthält.

4. Verwendung nach einem oder mehreren der Ansprüche 1 bis 3, **dadurch gekennzeichnet, daß** Textilien, die gegenüber oxidativen Desinfektionsmitteln und/oder Temperatur empfindlich sind, bei einer Temperatur von 10 bis 55 °C desinfizierend gewaschen werden.

5. Verwendung nach einem oder mehreren der Ansprüche 1 bis 4, **dadurch gekennzeichnet, daß** die gegenüber oxidativen Desinfektionsmitteln und/oder Temperatur empfindlichen Textilien Materialien ausgewählt aus Wolle, Seide-, Viskose-, Polyacrylfasern, Polyamid, Acetat, Lyocell enthalten.

6. Verwendung nach einem oder mehreren der Ansprüche 1 bis 5, **dadurch gekennzeichnet, daß** die Desinfektionskomponente zusammen mit üblichen Spezial-, Bunt-, Allein-, und Feinwaschmittel verwendet wird.

7. Verwendung nach einem oder mehreren der Ansprüche 1 bis 6, **dadurch gekennzeichnet, daß** die Desinfektionskomponente als Persäure eine organische Verbindung ausgewählt aus
a) den Persäuren oder Salzen von Persäuren mit der allgemeinen Formel I
R²-O₂C-(CH₂)ₓ-CO₃H (I)
worin R² Wasserstoff oder eine Alkylgruppe von 1 bis 4 Kohlenstoffatomen und x eine Zahl von 1 bis 4 ist, und/oder
b) den Phthalimido-Percarbonsäuren (11), worin der Percarbonsäure-Anteil 1 bis 18 Kohlenstoffatome enthält, und/oder
c) den Verbindungen der Formel III
R¹-CO₃H (III)
worin R¹ eine Alkyl- oder Alkenylgruppe mit 1 bis 18 Kohlenstoffatomen ist, enthält.

8. Verwendung nach Anspruch 7, **dadurch gekennzeichnet, daß**
a) als Persäuren gemäß der allgemeinen Formel 1 Persäuren enthalten sind, in denen R² Wasserstoff oder eine Methylgruppe ist, und/oder
b) als Persäuren Phthalimido-Persäuren enthalten sind, in denen der Percarbonsäure-Anteil 1 bis 8 Kohlenstoffatome enthält und/oder
c) als Persäuren gemäß der allgemeinen Formel III Persäuren mit einer Alkyl- oder Alkenylgruppe mit 1 bis 12 Kohlenstoffatomen enthalten sind.

9. Verwendung nach Anspruch 7 oder 8, **dadurch gekennzeichnet, daß** als Persäuren eine oder mehrere Verbindungen ausgewählt aus Peressigsäure, Perpropionsäure, Peroctansäure, Phthalimidoperhexansäure, Phthalimidoper6ctansäure, Perglutamäure, Perglutarsäuremonomethylester, Peradipinsäure, Peradipinsäuremonomethylester, Perbemsteinsäure, Perbemsteinsauremonomethylester, enthalten sind.

10. Verwendung nach einem oder mehreren der Ansprüche 1 bis 9, **dadurch gekennzeichnet, daß** durch Zugabe der Desinfektionskomponente eine wäßrige desinfizierende Waschlösung erzeugt wird, in der der Persäure-Anteil, bezogen auf die gesamte desinfizierende Waschlösung, 0.0001 bis 2 Gew.% beträgt.

11. Verwendung nach einem oder mehreren der Ansprüche 1 bis 10. **dadurch gekennzeichnet, daß** durch Zugabe der Desinfektionskomponente eine wäßrige desinfizierende Waschlösung erzeugt wird, die zusätzlich Wasserstoffperoxid mit einem Anteil, bezogen auf die gesamte desinfizierende Waschlösung, 0,0005 bis 2 Gew.% enthält.

12. Verwendung nach einem oder mehreren der Ansprüche 1 bis 11, **dadurch gekennzeichnet, daß** als Fettsäuren solche mit 8 bis 12 Kohlenstoffatomen enthalten sind.

13. Verwendung nach einem oder mehreren der Ansprüche 3 bis 12, **dadurch gekennzeichnet, daß** das Hydrotrop a) ausgewählt ist aus den Gruppen der Sulfonate, vorzugsweise aus Xylol-, Octyl-, Naphthyl- und Alkylbenzolsulfonaten, wobei im letzten Fall die Alkylgruppe zwischen 6 und 16 Kohlenstoffatomen beinhaltet.

14. Verwendung nach einem oder mehreren der Ansprüche 3 bis 13, **dadurch gekennzeichnet, daß** die tensidische Komponente b) ausgewählt ist aus den Gruppen der anionischen, kationischen, nichtionischen, amphoteren Tenside, Eiweißhydrolysate, der Alkylaminoxide, der Silikonverbindungen und der Phosphorsäureester und deren Sätzen.

15. Verwendung nach Anspruch 14, **dadurch gekennzeichnet, daß** die tensidische Komponente b) ein kationisiertes Proteinhdrolysat ist.

16. Verwendung nach einem der Ansprüche 1 bis 15, **dadurch gekennzeichnet, daß** die Desinfektionskomponente als wäßrige Lösung, Gel, Emulsion, Paste, Dispersion, Pulver, Granulat Schuppen, Perlen, Tablette, blockartiger Formkörper, Extrudat in den desinfizierenden Waschprozeß eingebracht wird.

17. Verwendung nach einem der Ansprüche 1 bis 16 **dadurch gekennzeichnet, daß** die Desinfektionskomponente im Bedarfsfall vor oder beim Einsatz im desinfizierenden Waschprozeß mit Wasser verdünnt wird.

18. Verwendung nach Anspruch 17, **dadurch gekennzeichnet, daß** der Verdünnungsfaktor zwischen 10 und 10000 liegt.

19. Verwendung nach einem oder mehreren der Ansprüche 1 bis 18, **dadurch gekennzeichnet, daß** die Desinfektionskomponente als Persäure eine Esterpersäure enthält und zusätzlich ein Anteil von mehr als 35 Gew.-% Wasserstoffperoxid, bezogen auf das gesamte Mittel, vorliegt.

20. Verwendung nach einem oder mehreren der Ansprüche 1 bis 19, **dadurch gekennzeichnet, daß** die Desinfektionskomponente eine Persäure und Octansäure sowie zusätzlich Octylsulfonat und/oder ein kationisiertes Eiweißhydrolysat enthält.

## Claims

1. Use of a disinfection component including a combination of peracid and at least one fatty acid in disinfectant washing of textiles to reduce the fiber-damaging effect of said peracid.

2. The use according to claim 1, **characterized in that** the disinfection component includes between 1 and 20 wt.-% peracid in combination with 0.1 to 10 wt.-% fatty acid, the balance to make 100 wt.-% consisting of water and/or other active substances or auxiliaries.

3. The use according to claim 1 or 2, **characterized in that** the disinfection component additionally includes
a) at least one hydrotropic compound and/or
b) at least one surfactant component and/or
c) at least one complexing component.

4. The use according to one or more of claims 1 to 3, **characterized in that** textiles sensitive to oxidative disinfectants and/or temperature are subjected to disinfectant washing at a temperature of from 10 to 55°C.

5. The use according to one or more of claims 1 to 4, **characterized in that** the textiles sensitive to oxidative disinfectants and/or temperature include materials selected from wool, silk, viscose, polyacrylic fibers, polyamide, acetate, lyocell.

6. The use according to one or more of claims 1 to 5, **characterized in that** the disinfection component is used together with customary special, color care, sole, and mild detergents.

7. The use according to one or more of claims 1 to 6, **characterized in that** the disinfection component includes as peracid an organic compound selected from
a) peracids or salts of peracids having the general formula I
R²-O₂C-(CH₂)ₓ-CO₃H (I)
wherein R² is hydrogen or an alkyl group having 1 to 4 carbon atoms, and x is a number of from 1 to 4, and/or
b) phthalimido-percarboxylic acids (II), in which the percarboxylic acid portion includes 1 to 18 carbon atoms, and/or
c) compounds of formula III
R¹-CO₃H (III)
wherein R¹ is an alkyl or alkenyl group with 1 to 18 carbon atoms.

8. The use according to claim 7, **characterized in that**
a) peracids wherein R² is hydrogen or a methyl group are included as peracids according to general formula I, and/or
b) phthalimido-peracids wherein the percarboxylic acid portion includes 1 to 8 carbon atoms are included as peracids, and/or
c) peracids having an alkyl or alkenyl group with 1 to 12 carbon atoms are included as peracids according to general formula III.

9. The use according to claim 7 or 8, **characterized in that** one or more compounds selected from peracetic acid, perpropionic acid, peroctanoic acid, phthalimidoperhexanoic acid, phthalimidoperoctanoic acid, perglutaric acid, perglutaric acid monomethyl ester, peradipic acid, peradipic acid monomethyl ester, persuccinic acid, persuccinic acid monomethyl ester are included as peracids.

10. The use according to one or more of claims 1 to 9, **characterized in that** as a result of adding said disinfection component, an aqueous disinfectant wash solution is produced wherein the peracid level, relative to the overall disinfectant wash solution, is from 0.0001 to 2 wt.-%.

11. The use according to one or more of claims 1 to 10, **characterized in that** as a result of adding said disinfection component, an aqueous disinfectant wash solution is produced which additionally includes hydrogen peroxide at a level of from 0.0005 to 2 wt.-%, relative to the overall disinfectant wash solution.

12. The use according to one or more of claims 1 to 11, **characterized in that** fatty acids having 8 to 12 carbon atoms are included as fatty acids.

13. The use according to one or more of claims 3 to 12, **characterized in that** the hydrotropic compound a) is selected from the group of sulfonates, preferably from xylene-, octyl-, naphthyl- and alkylbenzenesulfonates, the alkyl group in the latter case including between 6 and 16 carbon atoms.

14. The use according to one or more of claims 3 to 13, **characterized in that** the surfactant component b) is selected from the groups of anionic, cationic, non-ionic, amphoteric surfactants, protein hydrolyzates, alkylamine oxides, silicone compounds, phosphoric esters and salts thereof.

15. The use according to claim 14, **characterized in that** the surfactant component b) is a cationized protein hydrolyzate.

16. The use according to any of claims 1 to 15, **characterized in that** the disinfection component is introduced into the wash process in the form of an aqueous solution, a gel, an emulsion, a paste, dispersion, powder, granulate, flakes, beads, tablet, block-like molding, and extrudate.

17. The use according to any of claims 1 to 16, **characterized in that** the disinfection component is diluted with water prior to or during use in the disinfecting wash process, if required.

18. The use according to claim 17, **characterized in that** the dilution factor is between 10 and 10,000.

19. The use according to one or more of claims 1 to 18, **characterized in that** the disinfection component includes an ester peracid as peracid and that, in addition, a percentage of more than 35 wt.-%, relative to the overall agent, of hydrogen peroxide is present.

20. The use according to one or more of claims 1 to 19, **characterized in that** the disinfection component includes a peracid and octanoic acid and, in addition, octylsulfonate and/or a cationized protein hydrolyzate.

## Revendications

1. Utilisation d'un composant de désinfection, qui contient une combinaison de peracides et d'au moins un acide gras, lors du lavage de désinfection de textiles, pour la diminution de l'action d'endommagement des fibres causée par les peracides.

2. Utilisation selon la revendication 1, **caractérisée en ce que** le composant de désinfection contient entre 1 et 20 % en poids de peracides en combinaison à de 0,1 à 10 % en poids d'acide gras, le restant consistant jusqu'à 100 % en poids d'eau et/ou d'agents actifs ou d'adjuvants supplémentaires.

3. Utilisation selon la revendication 1 ou 2, **caractérisée en ce que** le composant de désinfection contient en outre
a) au moins un hydrotrope et/ou
b) au moins un composant du type tensioactif et/ou
c) au moins un composant complexant.

4. Utilisation selon l'une quelconque des revendications 1 à 3, **caractérisée en ce que** les textiles, qui sont sensibles vis-à-vis des agents de désinfection oxydants et/ou de la température, sont lavées d'une manière désinfectante à une température allant de 10 à 55 °C.

5. Utilisation selon l'une quelconque des revendications 1 à 4, **caractérisée en ce que** les textiles sensibles vis-à-vis des agents de désinfection oxydants et/ou de la température contiennent des matériaux sélectionnés parmi les fibres de laine, de soie, de viscose, les fibres polyacryliques, les fibres de polyamide, d'acétate, de lyocell.

6. Utilisation selon l'une quelconque des revendications 1 à 5, **caractérisée en ce que** le composant de désinfection est utilisé conjointement avec des agents de lavage usuels spéciaux, pour couleurs, exclusifs et fins.

7. Utilisation selon l'une quelconque des revendications 1 à 6, **caractérisée en ce que** le composant de désinfection contient, en tant que peracide, un composé organique sélectionné parmi
a) les peracides ou les sels de peracides de la formule générale I
R²-O₂C-(CH₂)ₓ-CO₃H (I)
où R² est l'hydrogène et/ou un groupement alkyle de 1 à 4 atomes de carbone et x est un nombre de 1 à 4, et/ou
b) des acides phtalimodo-percarboxyliques (II), où la portion d'acide percarboxylique contient de 1 à 18 atomes de carbone, et/ou
c) des composés de la formule III
R¹-CO₃H (III)
où R¹ est un groupement alkyle ou alcényle ayant de 1 à 18 atomes de carbone.

8. Utilisation selon la revendication 7, **caractérisée en ce que**
a) sont contenus, en tant que peracides conformément à la formule générale I, des peracides dans lesquels R² est l'hydrogène ou un groupement méthyle, et/ou
b) sont contenus, en tant que peracides, des acides phtalimido-percarboxyliques, dans lesquels la portion d'acide percarboxylique contient de 1 à 8 atomes de carbone, et/ou
c) sont contenus, en tant que peracides conformément à la formule générale III, des peracides avec un groupement alkyle ou alcényle avec 1 à 12 atomes de carbone.

9. Utilisation selon la revendication 7 ou 8, **caractérisée en ce que** sont contenus, en tant que peracides, un ou plusieurs composés sélectionnés parmi l'acide peracétique, l'acide perpropionique, l'acide peroctanoïque, l'acide phtalimidoperhexanoïque, l'acide phtalimidoperoctanoïque, l'acide perglutarique, l'ester monométhylique de l'acide perglutarique, l'acide peradipique, l'ester monométhylique de l'acide peradipique, l'acide persuccinique, l'ester monométhylique de l'acide persuccinique.

10. Utilisation selon l'une quelconque des revendications 1 à 9, **caractérisée en ce que** l'on produit, par addition des composants de désinfection, une solution aqueuse de lavage de désinfection, dans laquelle la portion de peracide, par rapport à la solution de lavage de désinfection totale, est de 0,0001 à 2 % en poids.

11. Utilisation selon l'une quelconque des revendications 1 à 10, **caractérisée en ce que** l'on produit, par addition des composants de désinfection, une solution aqueuse de lavage de désinfection, qui contient, en sus, du peroxyde d'hydrogène avec une proportion, par rapport à la solution de lavage de désinfection totale, de 0,0005 à 2 % en poids.

12. Utilisation selon l'une quelconque des revendications 1 à 11, **caractérisée en ce que** sont contenus, en tant qu'acides gras, des acides gras ayant de 8 à 12 atomes de carbone.

13. Utilisation selon l'une quelconque des revendications 3 à 12, **caractérisée en ce que** l'hydrotrope a) est sélectionné parmi les groupes des sulfonates, de préférence, des sulfonates de xylol, d'octyle, de naphtyle et d'alkylbenzène, le groupement alkyle dans ce dernier cas, contenant entre 6 et 16 atomes de carbone.

14. Utilisation selon l'une quelconque des revendications 3 à 13, **caractérisée en ce que** le composant du type tensioactif b) est sélectionné parmi les groupes des agents tensioactifs amphotères anioniques, cationiques, non ioniques, des produits d'hydrolyse de protéine, des alkylamino-oxydes, des composés de silicone et des esters de l'acide phosphorique et de leurs sels.

15. Utilisation selon la revendication 14, **caractérisée en ce que** le composant du type tensioactif b) est un produit d'hydrolyse de protéines cationisé.

16. Utilisation selon l'une quelconque des revendications 1 à 15, **caractérisée en ce que** le composant de désinfection est introduit dans le processus de lavage de désinfection sous forme de solution aqueuse, gel, émulsion, pâte, dispersion, poudre, granulé, paillette, perle, comprimé, corps moulé en forme de bloc, produit d'extrusion.

17. Utilisation selon l'une quelconque des revendications 1 à 16, **caractérisée en ce que** le composant de désinfection est dilué à l'aide d'eau, en cas de besoin, avant ou après l'utilisation dans le processus de lavage de désinfection.

18. Utilisation selon la revendication 17, **caractérisée en ce que** le facteur de dilution se situe entre 10 et 10000.

19. Utilisation selon l'une quelconque des revendications 1 à 18, **caractérisée en ce que** le composant de désinfection contient en tant que peracide un peracide d'ester et, en sus, une portion de plus de 35 % en poids de peroxyde d'hydrogène, par rapport à l'agent global.

20. Utilisation selon l'une quelconque des revendications 1 à 19, **caractérisée en ce que** le composant de désinfection contient un peracide et de l'acide octanoïque ainsi qu'en sus du sulfonate d'octyle et/ou un produit cationisé d'hydrolyse de l'albumine.
